# EUROPEAN PATENT APPLICATION

(11) **EP 2 703 359 A2**
(43) Date of publication of application: **05.03.2014**
(21) Application number: 12776002.3
(22) Date of filing: 05.04.2012
(51) Int. Cl.: C02F 1/461, B63B 13/00, C25B 9/00, C02F 1/467, C02F 1/50

(54) **DEVICE FOR TREATING BALLAST WATER BY MEANS OF AN ELECTROLYSIS METHOD SO AS TO PREVENT SHIP EXPLOSIONS, AND METHOD FOR CONTROLLING THE PREVENTION OF SHIP EXPLOSIONS USING SAME**

(30) Priority: 29.04.2011 KR 20110040491
(71) Applicant: Hyundai Heavy Industries Co., Ltd, Ulsan 682-792 (KR)
(72) Inventor: LEE, Ji-Hyoung, Ulsan 682-808 (KR); JEONG, Gil-Ju, Ulsan 682-809 (KR); KIM, Yang-Gyu, Ulsan 681-800 (KR); LEE, Tae-Jin, Yongin-si Gyeonggi-do 448-537 (KR); HAN, Ki-Hoon, Ulsan 682-819 (KR)
(74) Representative: Michalski Hüttermann & Partner Patentanwälte
(86) International application number: PCT/KR2012/002559
(87) International publication number: WO 2012/148095

(57) **Abstract**

The present invention relates to a device for treating ballast water using an electrolysis method so as to prevent ship explosions, and to a method for controlling the prevention of ship explosions using same. The device for treating ballast water using an electrolysis method is installed in a ship, wherein the apparatus comprises: a partition wall for separating an explosion danger zone in which a ballast tank is installed, and a safety zone in which the apparatus for treating ballast water is installed; a chlorine-injection tube linearly passing through said partition wall so as to connect the apparatus for treating ballast water to the ballast tank; and a compressor installed in said chlorine-injection tube so as to maintain a positive pressure in said chlorine-injection tube by transferring water into said chlorine-injection tube, even when an operation using the chlorine-injection tube is stopped.

## Description

### [Technical Field]

The present invention relates to an apparatus for treating ballast water using an electrolysis method for preventing explosion of a ship and a method of controlling the prevention of explosion of a ship using the same and, more particularly, to an apparatus for treating ballast water using an electrolysis method for preventing explosion of a ship and a method of controlling the prevention of a ship explosion using the same, which can minimize a flow path of a chlorine injection pipe and preventing the counter current of leaks from a gas dangerous zone to a safety zone.

### [Background Art]

Recently, as the obligation of the treatment of ship ballast water according to the adoption of an IMO-related agreement is expected, several methods for treating ballast water are being developed. From among the methods, a number of methods of treating ballast water using electrolysis are being developed.

In general, when seawater is made flow into an electrolytic bath and DC power is supplied to an electrode, chlorine is generated from a positive electrode.

Treating ballast water using electrolysis as described above is a method of extirpating animal plankton, vegetable plankton, bacteria, etc. which are present in the ballast water by adding chlorine (hypochlorous acid), generated in an electrolytic bath, to ship ballast water.

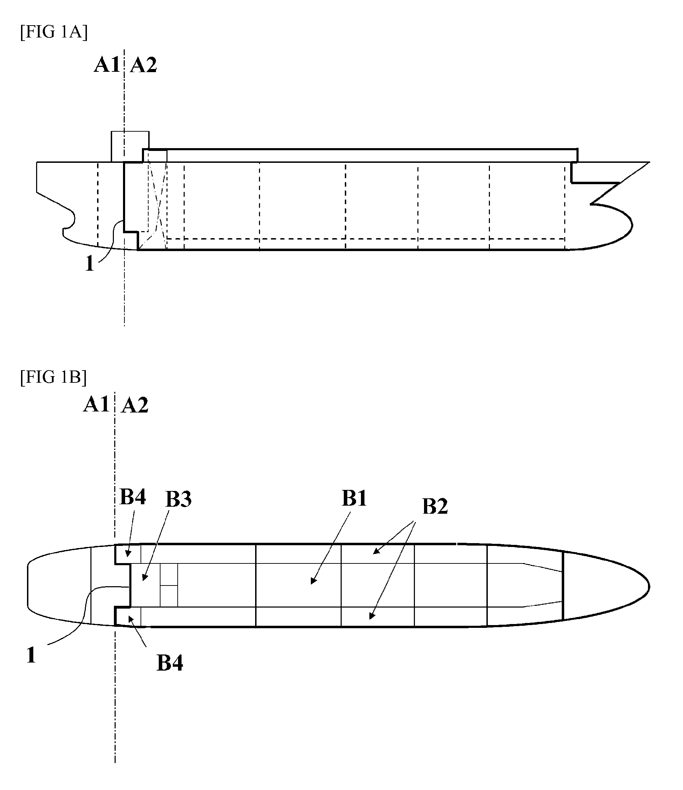

Meanwhile, a ship is classified depending on a transport medium. A ship on which a cargo including inflammable gas is loaded (e.g., a tank ship on which oil, gas, or chemicals are carried or a bulk carrier ship for transporting coal), as shown in FIG. 1a, can be partitioned into a safety zone A1 and a gas dangerous zone A2 by a partition wall 1.

Here, a specific type for an electrical device or a mechanical device is required to be used in the gas dangerous zone A2.

Furthermore, as shown in FIG. 1b, the gas dangerous zone A2 is partitioned into a cargo oil tank (B1) zone, a ballast water tank (B2) zone, a pump room (B3) zone, and a fuel oil tank (B4) zone in which the grades of dangerous zones are differently defined.

Meanwhile, a ballast water treatment apparatus using an electrolysis method for treating ballast water is installed within the ship.

The ballast water treatment apparatus can be basically classified into an electrolysis device 10, the ballast tank B2 into which chlorine (hypochlorous acid) generated from the electrolysis device 10 flows, and a chlorine injection pipe 20 coupling the electrolysis device 10 and the ballast tank B2.

The electrolysis device 10 is installed in an engine room that belongs to the safety zone A1, and the ballast tank B2 is installed within the gas dangerous zone A2 as described above.

Furthermore, the chlorine injection pipe 20 is connected to the ballast tank B2 installed within the gas dangerous zone A2.

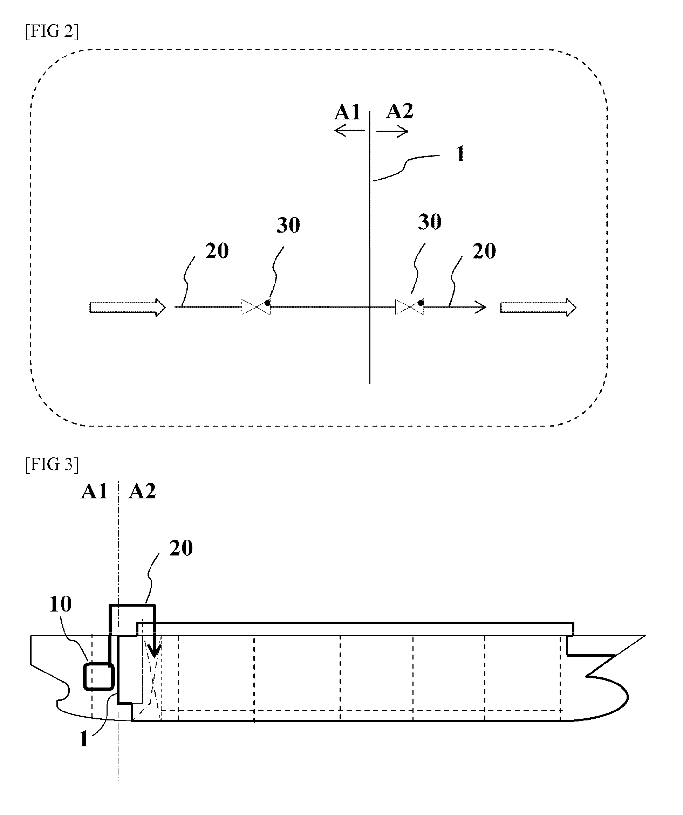

Here, as shown in FIG. 2, check valves 30 are installed at respective portions of the chlorine injection pipe 20 which are disposed in the safety zone A1 and the gas dangerous zone A2, thus preventing the counter current of leaks from the gas dangerous zone A2 to the safety zone A1 along the chlorine injection pipe 20.

In the ballast water treatment apparatus constructed as above, chlorine generated from the electrolysis device 10 flows into the ballast tank B2 along the chlorine injection pipe 20 and thus extirpates living things present within ballast water.

However, the conventional ballast water treatment apparatus had the following problem.

Since leaks from the gas dangerous zone A2 are propagated into the safety zone A1, there was a problem that leads to a danger of exploding a mechanical device, such as the electrolysis device 10 installed within the safety zone A1.

The counter current of leaks from the gas dangerous zone A2 is blocked by installing the check valves 30, etc., but the propagation of leaks into the safety zone A1 was not perfectly prevented by only the check valves 30. Such a design is not approved even in classification class.

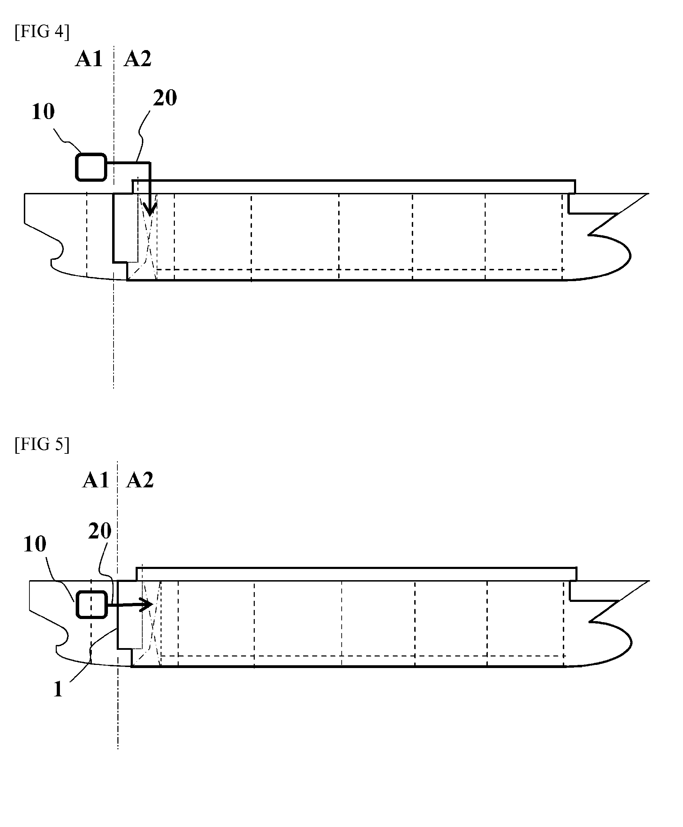

In order to solve such a problem, as shown in FIGS. 3 and 4, the electrolysis device 10 was installed in the deck of the ship, or the chlorine injection pipe 20 was not directly connected to the ballast tank B2 through the partition wall 1, but was connected to the ballast tank B2 through the external deck of the ship by detouring the external duct.

The above-described scheme, however, had a difficulty in a task of installing the chlorine injection pipe 20 because the distance from the zone where the electrolysis device 10 is installed to the ballast tank B2 becomes distant and had a difficulty in function because the time taken for chlorine to reach the inside of the ballast tank B2 becomes long.

Furthermore, there was a problem in that economy was low because materials costs and installation charges for installing the chlorine injection pipe 20 are increased.

### [Disclosure]

### [Technical Problem]

The present invention has been made to solve the above-described problems, and an object of the present invention is to provide an apparatus for treating ship ballast water using an electrolysis method for preventing a ship explosion and a method of controlling the prevention of a ship explosion using the same, which can minimize the flow path length of a chlorine injection pipe between an electrolysis device and a ballast tank and enable a pressurization device to form positive pressure in a flow path to the ballast tank by installing the pressurization device in the flow path between the electrolysis device and the ballast tank.

### [Technical Solution]

In order to achieve the above object, there is provided a ballast water treatment apparatus using an electrolysis method for preventing explosion of a ship in which the ballast water treatment apparatus is installed, including a partition wall partitioning a gas dangerous zone in which a ballast tank is installed and a safety zone in which the ballast water treatment apparatus is installed; a chlorine injection pipe coupling the ballast water treatment apparatus and the ballast tank through the partition wall in a straight line; and a pressure device installed in the chlorine injection pipe and configured to maintain positive pressure in the chlorine injection pipe by making water flow into the chlorine injection pipe although the chlorine injection pipe stops operating.

Here, preferably, an on-off valve for controlling the flow of a fluid into the ballast tank is installed in the chlorine injection pipe of the gas dangerous zone, a check valve is installed in the chlorine injection pipe of the safety zone, the partition wall is interposed between the on-off valve and the check valve, and the pressure device is installed in the chlorine injection pipe between the check valve and the on-off valve.

Furthermore, the pressure device may include an open type tank having an inflow valve installed therein and installed in a place higher than a location of the chlorine injection pipe, a water level sensor measuring a water level of the open type tank, a pressurization pipe coupling the open type tank and the chlorine injection pipe, and a pressurization valve installed in the pressurization pipe and controlling the flow of water into the chlorine injection pipe. The pressure device may include a sealed tank having an inflow valve installed therein and installed in a place lower than a location of the chlorine injection pipe, a water level sensor measuring a water level of the sealed tank, a pressurization pipe coupling the sealed tank and the chlorine injection pipe, a pressurization valve installed in the pressurization pipe and controlling the flow of water into the chlorine injection pipe, and a pressure sensor and a compressed air supply device installed in the sealed tank and controlling pressure within the sealed tank.

Meanwhile, another example of the present invention for achieving the object provides a method of controlling prevention of a ship explosion using a ballast water treatment apparatus using an electrolysis method, including a water storage step of storing water in an open type tank of a pressure device; a water level measurement step of measuring, by a water level sensor, a water level of the open type tank; a chlorine injection pipe opening step of closing the duct of an inflow pipe by making an inflow valve off and opening the duct of the chlorine injection pipe by making an on-off valve on, if the water level of the open type tank is equal to or greater than a water level set by the water level sensor; a chlorine injection step of injecting chlorine from an electrolysis device to a ballast tank when the duct of the chlorine injection pipe is opened; a closing step of closing the duct of the chlorine injection pipe when the injection of chlorine into the ballast tank is completed; and a pressurization step of making the water of the open type tank flow into the chlorine injection pipe by opening a pressurization pipe duct of the pressure device.

Meanwhile, yet another example of the present invention for achieving the object provides a method of controlling prevention of a ship explosion using a ballast water treatment apparatus using an electrolysis method, including a water storage step of storing water in an open type tank of a pressure device; a water level measurement step of measuring, by a water level sensor, a water level of the open type tank; an inflow pipe closing step of closing an inflow pipe by making an inflow valve off, if the water level of the open type tank is equal to or greater than a water level set by the water level sensor; a pressure maintenance step of maintaining, by a compressed air supply device and a pressure sensor, pressure within a sealed tank higher than atmospheric pressure when the inflow pipe is closed; a chlorine injection pipe opening step of comparing, by the pressure sensor, the internal pressure of the sealed tank with set pressure and opening the duct of the chlorine injection pipe by making an on-off valve on if the internal pressure of the sealed tank is higher than the set pressure; a chlorine injection step of injecting chlorine from an electrolysis device to a ballast tank when the duct of the chlorine injection pipe is opened; a closing step of closing the duct of the chlorine injection pipe when the injection of chlorine into the ballast tank is completed; and a pressurization step of making the water of the open type tank flow into the chlorine injection pipe by opening a pressurization pipe duct of the pressure device.

### [Advantageous Effects]

The apparatus for treating ballast water using an electrolysis method for preventing explosion of a ship and the method of controlling the prevention of a ship explosion using the same in accordance with the present invention have the following advantages.

Although the injection of chlorine into the ballast tank is completed and the duct of the chlorine injection pipe is closed, positive pressure can remain intact in the chlorine injection pipe because the pressurization device installed in the chlorine injection pipe lest water flow into the chlorine injection pipe.

Accordingly, there is an advantage in that leaks from the gas dangerous zone do not flow backward to the safety zone along the chlorine injection pipe because the positive pressure is formed within the chlorine injection pipe when chlorine is injected or when the injection of chlorine is stopped.

Furthermore, there is an advantage in that efficiency is improved because it is not necessary to install the chlorine injection pipe in a deck or to install the electrolysis device in a ship deck in order to prevent a problem in that a mechanical device is exploded due to the counter current of leaks from the gas dangerous zone.

That is, the chlorine injection pipe installed in the electrolysis device is directly connected to the ballast tank through the partition wall in the state in which the electrolysis device has been installed in the safety zone and the ballast tank has been installed in the gas dangerous zone partitioned by the partition wall. Accordingly, the length of a flow path along which chlorine flows can be minimized.

Accordingly, there are advantages in that materials costs are reduced, the installation of a pipe is easy, and chlorine flowing along the pipe can rapidly reach the ballast tank functionally.

### [Description of Drawings]

FIG. 1a a schematic diagram showing the gas dangerous zone and the safety zone of a ship.
FIG. 1b is a schematic diagram showing the partitioned gas dangerous zones of the ship.
FIG. 2 is a construction schematically showing a conventional system for controlling the flow of a fluid between an electrolysis device and a ballast tank.
FIGS. 3 and 4 are schematic diagrams showing an example in which a chlorine injection pipe is installed between an electrolysis device and a ballast tank in the prior art.
FIG. 5 is a schematic diagram showing the installation of a chlorine injection pipe between an electrolysis device and a ballast tank in accordance with a preferred embodiment of the present invention.
FIG. 6 is a schematic diagram showing an apparatus for treating ballast water in a ship in accordance with a preferred embodiment of the present invention.
FIG. 7 is a flowchart illustrating a method of controlling the prevention of explosion using the apparatus for treating ballast water in a ship in accordance with a preferred embodiment of the present invention.
FIG. 8 is a schematic diagram showing an apparatus for treating ballast water in a ship in accordance with another embodiment of the present invention.
FIG. 9 is a flowchart illustrating a method of controlling the prevention of explosion using the apparatus for treating ballast water in a ship in accordance with another embodiment of the present invention.

### <Description of reference numerals of principal elements in the drawings>

| | | | |
|---|---|---|---|
| 1: | partition wall | 10: | electrolysis device |
| 20: | chlorine injection pipe | 30: | check valve |
| 40: | on-off valve | 100: | pressurization device |
| 110: | open type tank | 111: | inflow pipe |
| 112: | inflow valve | 120: | water level sensor |
| 130: | pressurization pipe | 140: | pressurization valve |
| 150: | sealed tank | 160: | pressure sensor |
| 170: | compressed air supply device | | |
| A1: | safety zone | A2: | gas dangerous zone |
| B1: | oil tank | B2: | ballast tank |
| B3: | pump room | B4: | fuel tank |

### [Mode for Invention]

Terms or words used in the present specification and claims should not be construed as having common or dictionary meanings, but should be construed as having meanings and concepts that comply with the technical spirit of the present invention on the basis of a principle that the inventor may appropriately define the concepts of terms in order to describe his or her invention in the best way.

An apparatus for treating ship ballast water using an electrolysis method for preventing explosion of a ship (hereinafter referred to as a 'ballast water treatment apparatus') in accordance with a preferred embodiment of the present invention is described below with reference to FIGS. 5 to 7.

Prior to a description, the same reference numerals as those of the prior art are assigned to the same elements.

The ballast water treatment apparatus is configured to include an electrolysis device 10, a ballast tank B2, a chlorine injection pipe 20, and a pressurization device 100.

The electrolysis device 10 generates chlorine (hypochlorous acid) by performing electrolysis on seawater and. The electrolysis device 10 is installed in the safety zone A1.

Furthermore, the ballast tank B2 accommodates ballast water, and the ballast tank B2 is installed in the gas dangerous zone A2.

Here, the safety zone A1 and the gas dangerous zone A2 are partitioned by a partition wall 1.

Furthermore, the chlorine injection pipe 20 is a duct through which chlorine generated from the electrolysis device 10 flows into the ballast tank B2. One end of the chlorine injection pipe 20 is connected to the electrolysis device 10, and the other end of the chlorine injection pipe 20 is connected to the ballast tank B2.

Here, the chlorine injection pipe 20 is directly connected to the ballast tank B2 through the partition wall 1 in a straight line so that the flow path of the chlorine injection pipe 20 is minimized, as shown in FIG. 5.

A check valve 30 is installed at a portion of the chlorine injection pipe 20 which is disposed in the safety zone A1, and an on-off valve 40 is installed at a portion of the chlorine injection pipe 20 which is disposed in the gas dangerous zone A2.

The pressurization device 100 functions to prevent leaks from the gas dangerous zone A2 from flowing backward to the safety zone A1. The pressurization device 100 is installed in the safety zone A1.

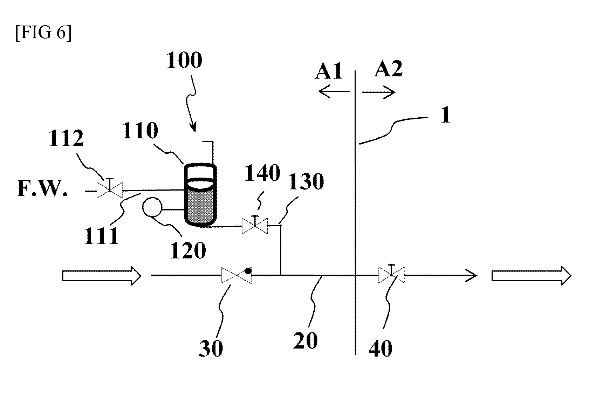

As shown in FIG. 6, the pressurization device 100 is connected to and installed in the chlorine injection pipe 20. Although the injection of chlorine into the ballast tank B2 is stopped, the pressurization device 100 forms positive pressure within the chlorine injection pipe 20 so that leaks from the gas dangerous zone A2 do not flow backward through the chlorine injection pipe 20.

The pressurization device 100 is described below.

When the injection of chlorine into the ballast tank B2 is stopped, the pressurization device 100 makes flow water into the chlorine injection pipe 20 so that positive pressure is formed within the chlorine injection pipe 20. The pressurization device 100 is installed between the check valve 30 and the on-off valve 40.

Accordingly, since a fluid always flows or remains within the chlorine injection pipe 20, leaks are blocked by the fluid within the chlorine injection pipe 20 although the leaks are generated from the gas dangerous zone A2. Accordingly, the leaks do not flow backward to the safety zone A1.

The pressurization device 100 is configured to include an open type tank 110, a water level sensor 120, a pressurization pipe 130, and a pressurization valve 140.

The open type tank 110 is a portion where water is stored. An inflow pipe 111, that is, a duct into which water flows, and an inflow valve 112 for opening or closing the inflow pipe 111 are installed on one side of the open type tank 110.

Here, the open type tank 110 preferably is provided when the pressurization device 100 is installed in a place higher than the location of the chlorine injection pipe 20.

If the pressurization device 100 is installed in a place lower than the location of the chlorine injection pipe 20, the pressurization device 100 preferably is a pressurization device including a sealed tank. Such a sealed pressurization device is described later.

Meanwhile, the water level sensor 120 for measuring a water level is installed in the open type tank 110.

The water level sensor 120 measures a water level of water flowed into the open type tank 110. When a certain water level is detected by the water level sensor 120, a control unit (not shown) enables the inflow valve 112 to be off so that the duct of the inflow pipe 111 is closed.

Furthermore, the pressurization pipe 130 couples the open type tank 110 and the chlorine injection pipe 20 and functions as a duct along which the water of the open type tank 110 flows into the chlorine injection pipe 20.

Here, the pressurization valve 140 for opening or closing the duct of the pressurization pipe 130 is installed in the pressurization pipe 130.

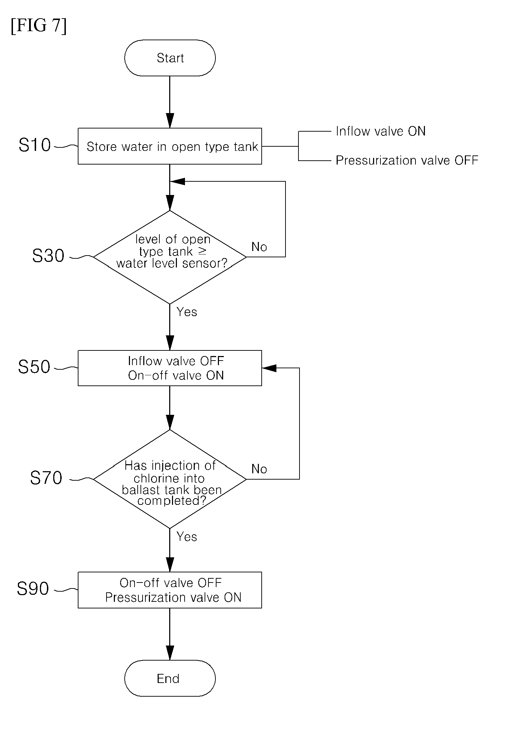

An operation of the ballast water treatment apparatus having the above construction in accordance with a preferred embodiment of the present invention is described below with reference to FIG. 7.

Water is stored in the open type tank 110 of the pressurization device 100 (S10).

Here, the inflow valve 112 becomes on by the control unit, thereby opening the duct of the inflow pipe 111 is opened, and the pressurization valve 140 becomes off, thereby closing the duct of the pressurization pipe 130.

Next, when the water flows into the open type tank 110 through the inflow pipe 111, the water level sensor 120 measures a water level of the open type tank 110 (S30).

If the water level of the open type tank 110 is equal to or greater than a water level set by the water level sensor 120, the inflow valve 112 becomes off, thereby closing the duct of the inflow pipe 111, and the on-off valve 40 becomes on, thereby opening the duct of the chlorine injection pipe 20 (S50).

Next, chlorine generated from the electrolysis device 10 flows into the ballast tank B2 along the duct of the chlorine injection pipe 20 (S70).

When the injection of chlorine into the ballast tank B2 is completed, the on-off valve 40 becomes off, thereby closing the duct of the chlorine injection pipe 20 between the on-off valve 40 and the ballast tank B2, so the introduction of chlorine into the ballast tank is stopped.

At this time, the duct of the pressurization pipe 130 is opened and the duct of the pressurization pipe 130 is opened because the pressurization valve 140 becomes on. Accordingly, the water stored in the open type tank 110 flows into the chlorine injection pipe 20 along the pressurization pipe 130 (S90).

In this case, the water flows into the chlorine injection pipe 20 in a natural flow way because the pressurization device 100 is installed in a place higher than the chlorine injection pipe 20.

Meanwhile, since the on-off valve 40 becomes off, the water does not flow into the ballast tank B2, but remains in the chlorine injection pipe 20 between the pressurization pipe 130 and the on-off valve 40.

That is, the water remains in the duct of the chlorine injection pipe 20 and forms positive pressure toward the ballast tank B2.

Although the injection of chlorine is stopped and the inside of the duct of the chlorine injection pipe 20 becomes an empty state, the pressurization device 100 makes flow water into the duct of the chlorine injection pipe 20. Accordingly, the duct of the chlorine injection pipe 20 is always filled with water, thereby forming positive pressure.

Although leaks are generated from the gas dangerous zone A2 in which the ballast tank B2 is installed, the leaks do not flow backward along the chlorine injection pipe 20.

Furthermore, as described above, the electrolysis device 10 can be installed in the safety zone A1 because leaks from the gas dangerous zone A2 do not flow backward to the safety zone A1, and a chlorine injection flow path can be minimized because the chlorine injection pipe 20 can be directly connected to the ballast tank B2 in a straight line through the partition wall 1.

Meanwhile, in the preferred embodiment of the present invention described so far, an example in which the pressurization device 100 is installed at a place higher than the chlorine injection pipe 20 has been described.

However, the pressurization device 100 may be installed in a place lower than the chlorine injection pipe 20 depending on installation environments within a ship.

If the pressurization device 100 is installed in a placed lower than the chlorine injection pipe 20 as described above, the water of the pressurization device 100 needs to be made flow into the chlorine injection pipe 20 artificially not in a natural flow way.

To this end, a sealed tank having pressure means installed therein is provided. The sealed tank is described as another embodiment of the present invention.

Prior to a description, the same reference numerals as those of the preferred embodiment of the present invention are assigned to the same elements.

A ballast water treatment apparatus in accordance with another embodiment of the present invention is configured to include an electrolysis device 10, a ballast tank B2, a chlorine injection pipe 20, and a pressurization device 100.

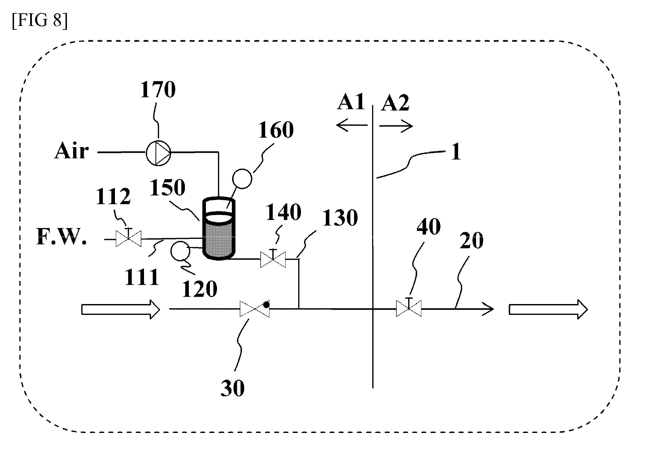

Here, the pressurization device 100 includes a sealed tank 150, a water level sensor 120, a pressurization pipe 130, a pressurization valve 140, a pressure sensor 160, and a compressed air supply device 170, as shown in FIG. 8.

Pressure within the sealed tank 150 is always maintained to set pressure or higher by means of the pressure sensor 160 and the compressed air supply device 170.

Meanwhile, although not shown, a barrier film may be installed within the sealed tank 150 in order to expect a corrosion prevention effect by block the introduction of air.

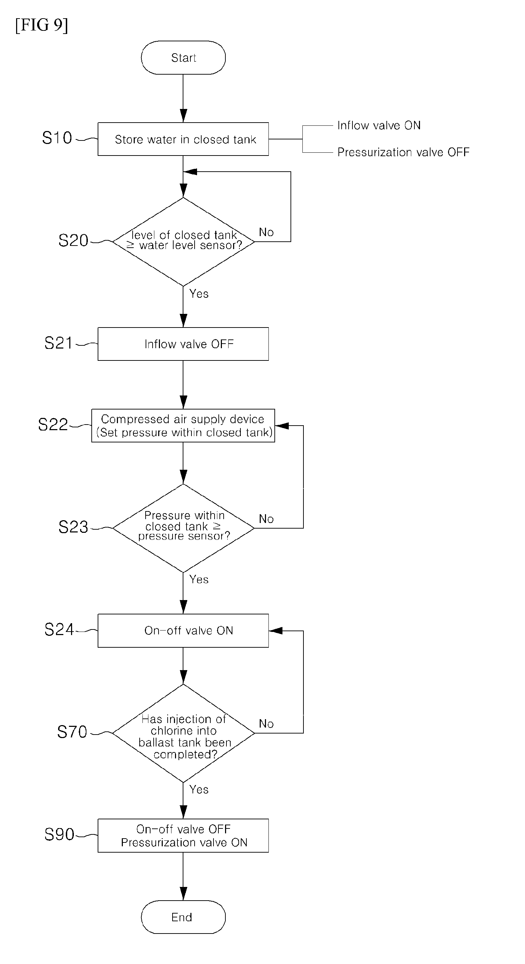

An operation of the ballast water treatment apparatus having the above construction in accordance with another embodiment of the present invention is described below with reference to FIG. 9.

Water is stored in the sealed tank 150 of the pressurization device 100 (S10).

Here, the inflow valve 112 becomes on, thereby opening the inflow pipe 111, and the pressurization valve 140 becomes off, thereby closing the pressurization pipe 130.

Next, when water flows into the sealed tank 150 through the inflow pipe 111, the water level sensor 120 measures a water level of the sealed tank 150 (S20).

If a water level of the sealed tank 150 is equal to or greater than a water level set by the water level sensor 120, the inflow valve 112 becomes off, thereby closing the inflow pipe 111 (S21).

Next, pressure within the sealed tank 150 is raised through the compressed air supply device 170.

Next, the pressure sensor 160 compares the internal pressure of the sealed tank 150 with set pressure (S23).

If the internal pressure of the sealed tank 150 is higher than the set pressure, the control unit turns on the on-off valve 40 of the chlorine injection pipe 20, thereby opening the duct of the chlorine injection pipe 20 (S24).

Next, chlorine generated from the electrolysis device 10 flows into the ballast tank B2 along the chlorine injection pipe 20 (S70).

Next, when the injection of chlorine into the ballast tank B2 is completed, the on-off valve 40 becomes off and thus the introduction of a fluid into the ballast tank B2 is blocked.

At this time, the pressurization valve 140 becomes on, thereby opening the duct of the pressurization pipe 130. When the duct of the pressurization pipe 130 is opened, the water stored in the sealed tank 150 flows into the chlorine injection pipe 20 along the duct of the pressurization pipe 130 (S90).

In this case, although the pressurization device 100 is installed in a place lower than the chlorine injection pipe 20, the water can flow into the chlorine injection pipe 20 along the duct of the pressurization pipe 10 because the internal pressure of the sealed tank 150 is higher than atmospheric pressure.

Meanwhile, since the water does not flow into the ballast tank B2 because the on-off valve 40 of the chlorine injection pipe 20 is off, but the water remains in the chlorine injection pipe 20 between the pressurization pipe 130 and the on-off valve 40 and forms positive pressure within the chlorine injection pipe 20.

Accordingly, although leaks are generated from the gas dangerous zone A2 in which the ballast tank B2 is installed, the leaks do not flow backward along the chlorine injection pipe 20.

Furthermore, as described above, the electrolysis device 10 can be installed in the safety zone A1 because leaks from the gas dangerous zone A2 do not flow backward to the safety zone A1, and a chlorine injection flow path can be minimized because the chlorine injection pipe 20 can be directly connected to the ballast tank B2 in a straight line through the partition wall 1.

Accordingly, pipe materials can be minimized and installation costs can be reduced because the chlorine injection pipe 20 can be easily installed and does not need to be installed by detour.

Furthermore, there is a technical characteristic in that the injection of chlorine into the ballast tank B2 can be rapidly performed because a chlorine injection flow path is minimized.

Although the detailed examples of the present invention have been described, a variety of modifications and changes within the technical scope of the present invention are evident to those skilled in the art, and those modifications and changes belong to the attached claims.

## Claims

1. A ballast water treatment apparatus using an electrolysis method for preventing explosion of a ship in which the ballast water treatment apparatus is installed, the apparatus comprising:
a partition wall partitioning a gas dangerous zone in which a ballast tank is installed and a safety zone in which the ballast water treatment apparatus is installed;
a chlorine injection pipe coupling the ballast water treatment apparatus and the ballast tank through the partition wall in a straight line; and
a pressure device installed in the chlorine injection pipe and configured to maintain positive pressure in the chlorine injection pipe by making water flow into the chlorine injection pipe although the chlorine injection pipe stops operating.

2. The ballast water treatment apparatus of claim 1, wherein:
an on-off valve for controlling a flow of a fluid into the ballast tank is installed in the chlorine injection pipe of the gas dangerous zone, a check valve is installed in the chlorine injection pipe of the safety zone, and the partition wall is interposed between the on-off valve and the check valve, and
the pressure device is installed in the chlorine injection pipe between the check valve and the on-off valve.

3. The ballast water treatment apparatus of claim 1 or 2, wherein the pressure device comprises:
an open type tank having an inflow valve installed therein and installed in a place higher than a location of the chlorine injection pipe,
a water level sensor measuring a water level of the open type tank,
a pressurization pipe coupling the open type tank and the chlorine injection pipe, and
a pressurization valve installed in the pressurization pipe and controlling the flow of water into the chlorine injection pipe.

4. The ballast water treatment apparatus of claim 1 or 2, wherein the pressure device comprises:
a sealed tank having an inflow valve installed therein and installed in a place lower than a location of the chlorine injection pipe,
a water level sensor measuring a water level of the sealed tank,
a pressurization pipe coupling the sealed tank and the chlorine injection pipe,
a pressurization valve installed in the pressurization pipe and controlling the flow of water into the chlorine injection pipe, and
a pressure sensor and a compressed air supply device installed in the sealed tank and controlling pressure within the sealed tank.

5. A method of controlling prevention of a ship explosion using a ballast water treatment apparatus using an electrolysis method, the method comprising:
a water storage step of storing water in an open type tank of a pressure device;
a water level measurement step of measuring, by a water level sensor, a water level of the open type tank;
a chlorine injection pipe opening step of closing a duct of an inflow pipe by making an inflow valve off and opening a duct of the chlorine injection pipe by making an on-off valve on, if the water level of the open type tank is equal to or greater than a water level set by the water level sensor;
a chlorine injection step of injecting chlorine from an electrolysis device to a ballast tank when the duct of the chlorine injection pipe is opened;
a closing step of closing the duct of the chlorine injection pipe when the injection of chlorine into the ballast tank is completed; and
a pressurization step of making the water of the open type tank flow into the chlorine injection pipe by opening a pressurization pipe duct of the pressure device.

6. A method of controlling prevention of a ship explosion using a ballast water treatment apparatus using an electrolysis method, the method comprising:
a water storage step of storing water in an open type tank of a pressure device;
a water level measurement step of measuring, by a water level sensor, a water level of the open type tank;
an inflow pipe closing step of closing an inflow pipe by making an inflow valve off, if the water level of the open type tank is equal to or greater than a water level set by the water level sensor;
a pressure maintenance step of maintaining, by a compressed air supply device and a pressure sensor, pressure within a sealed tank higher than atmospheric pressure when the inflow pipe is closed;
a chlorine injection pipe opening step of comparing, by the pressure sensor, the internal pressure of the sealed tank with set pressure and opening a duct of the chlorine injection pipe by making an on-off valve on if the internal pressure of the sealed tank is higher than the set pressure;
a chlorine injection step of injecting chlorine from an electrolysis device to a ballast tank when the duct of the chlorine injection pipe is opened;
a closing step of closing the duct of the chlorine injection pipe when the injection of chlorine into the ballast tank is completed; and
a pressurization step of making the water of the open type tank flow into the chlorine injection pipe by opening a pressurization pipe duct of the pressure device.
